(19) Europäisches Patentamt
European Patent Office
Office européen des brevets

(11) **EP 1 701 629 B2**

(12) **NEW EUROPEAN PATENT SPECIFICATION**
After opposition procedure

(45) Date of publication and mention
of the opposition decision:
**14.09.2016 Bulletin 2016/37**

(45) Mention of the grant of the patent:
**05.10.2011 Bulletin 2011/40**

(21) Application number: **04804308.7**

(22) Date of filing: **27.12.2004**

(51) Int Cl.:
**A43B 13/12** (2006.01)    **B32B 7/02** (2006.01)

(86) International application number:
**PCT/EP2004/014718**

(87) International publication number:
**WO 2005/063070 (14.07.2005 Gazette 2005/28)**

(54) **WATERPROOF VAPOR-PERMEABLE MULTILAYER ARTICLE**

WASSERDICHTER, DAMPFDURCHLÄSSIGER MEHRLAGIGER ARTIKEL

ARTICLE MULTICOUCHE HYDROFUGE PERMEABLE A LA VAPEUR

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **30.12.2003 IT PD20030314**

(43) Date of publication of application:
**20.09.2006 Bulletin 2006/38**

(73) Proprietor: **Geox S.p.A.**
**31044 Montebelluna Località Biadene (Treviso) (IT)**

(72) Inventors:
• **POLEGATO MORETTI, Mario**
**I-31035 Crocetta del Montello (IT)**
• **FERRARESE, Antonio**
**I-37063 Isola Della Scala (IT)**
• **MATTIONI, Bruno**
**33100 Udine (IT)**

(74) Representative: **Modiano, Micaela Nadia et al**
**Modiano & Partners**
**Via Meravigli, 16**
**20123 Milano (IT)**

(56) References cited:
**WO-A-95/30793     DE-A1- 19 713 609**

• **DATABASE WPI Section Ch, Week 199151 Derwent Publications Ltd., London, GB; Class A23, AN 1991-372404 XP002327156 & JP 03 249235 A (KURARAY CO LTD) 7 November 1991 (1991-11-07)**
• **DATABASE WPI Section Ch, Week 198533 Derwent Publications Ltd., London, GB; Class A82, AN 1985-200426 XP002327157 & JP 60 126386 A (HIRAOKA SHOKUSEN KK) 5 July 1985 (1985-07-05)**
• **DATABASE WPI Section Ch, Week 200339 Derwent Publications Ltd., London, GB; Class A92, AN 2003-407398 XP002327158 & JP 2002 336635 A (SHINETSU POLYMER KK) 26 November 2002 (2002-11-26)**

EP 1 701 629 B2

**Description**

Technical Field

The present invention relates to a waterproof vapor-permeable multilayer article.

Background Art

Waterproof vapor-permeable multilayer articles, constituted in practice by a membrane based on polytetrafluoroethylene, are currently known particularly in the field of shoes and clothing.

Such membrane is coupled to the fabrics that compose the item of clothing in order to allow correct permeation of the water vapor that forms due to perspiration released by the body within the environment delimited by the item of clothing.

At the same time, the item of clothing must allow correct waterproofing, with the same goal of keeping the body dry.

The same occurs for shoes: membranes of this type are associated with the upper and with the sole of the shoe; in this regard, it should be noted that most of the perspiration of the foot originates at the interface between the sole of the foot and the sole of the shoe.

Currently known membranes, though having been used now for several years and being unanimously acknowledged as being capable of ensuring correct waterproofing and optimum permeability to water vapor and air, nonetheless have aspects that can be improved.

These membranes are scarcely resistant, and in fact they can tear easily: to give them strength, they are therefore coupled, generally by lamination, to a supporting mesh made of plastic material, which inevitably reduces their permeability to water vapor or air.

In any case, coupling to the mesh is not sufficient to achieve acceptable strength characteristics.

In view of the limited consistency of these membranes, it is evident that such membranes are not capable of being self-supporting.

For this reason, for example in soles, the membrane (which is integrated with the mesh) must be coupled to supports that are capable of supporting it adequately.

Moreover, it should be noted that when, for any particular reason, perspiration condenses inside the environment to be kept dry, which is delimited by said membranes, such perspiration can no longer be expelled, causing an unpleasant "wet" effect.

WO 95/30793 discloses a three-dimensional seamless shaped article, such as gloves, socks or films, made of a flexible layered composite that comprises: (a) a microporous thermoplastic polyester polyurethane that is water vapor permeable; and (b) a hydrophilic nonporous copolymer that is waterproof but water vapor permeable for improving the waterproofness of the composite layer over that of the microporous polymer layer alone.

DE 197 13 609 discloses a shoe sole provided with a hygroscopic drying agent contained in chambers arranged between the inner and outer soles of the shoe sole, whereby enough free space in the chambers is left to allow the agent to swell as required, and the agent is replaceably contained in the chambers.

Disclosure of the Invention

The aim of the present invention is to provide a waterproof vapor-permeable multilayer article that solves the drawbacks noted in known types.

Within this aim, an object of the present invention is to provide a waterproof vapor-permeable multilayer article that is structurally strong.

Another object of the present invention is to provide a waterproof vapor-permeable multilayer article that is particularly permeable to vapor or air.

Another object of the present invention is to provide a waterproof vapor-permeable multilayer article that is capable of being self-supporting.

Another object of the present invention is to provide a waterproof vapor-permeable multilayer article that can be manufactured with known systems and technologies.

This aim and these and other objects of the present invention that will become better apparent hereinafter are achieved by a waterproof vapor-permeable multilayer article as defined in the appended claims.

Brief Description of the Drawings

Further characteristics and advantages of the invention will become better apparent from the description of two preferred but not exclusive embodiments thereof, illustrated hereinafter by way of non-limiting example in the accompanying drawing, wherein:

Figure 1 is a sectional view of a first embodiment of a multilayer article according to the invention;
Figure 2 is a sectional view of a variation of the multilayer article of Figure 1;
Figure 3 is a sectional view of a second embodiment of a multilayer article according to the invention;
Figure 4 is a sectional view of a variation of the multilayer article of Figure 3.

Ways of carrying out the Invention

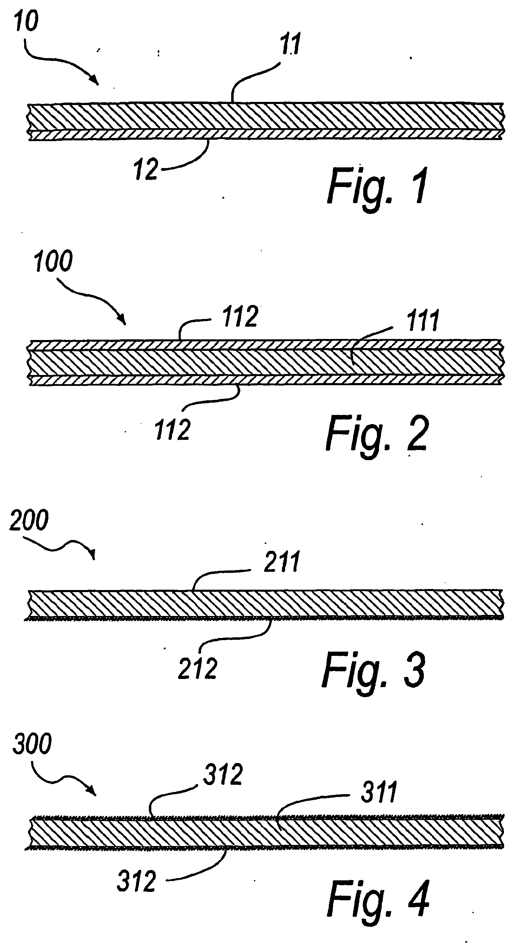

With reference to the first embodiment, shown in Figure 1, a waterproof vapor-permeable multilayer article according to the invention is generally designated by the reference numeral 10.

The multilayer article 10 comprises a first layer 11, made of a material that is vapor-permeable, microporous and hygroscopic, and a second layer 12, which is waterproof and vapor-permeable.

The first layer 11 is constituted for example by a hygroscopic material based on polyolefin and filler particles.

The filler particles are designed to create the micropores that allow permeability to vapor or air.

The polyolefin that is used in the example being described has a very high molecular weight; for this reason, such polyolefin is preferably a UHMW (ultra high molecular weight) polyethylene.

The characteristics of a UHMW polyolefin are referred to a polyolefin with an average molecular weight of at least 500.000 g/mole.

Preferably, the average molecular weight is comprised between $4x10^6$ g/mole and $7x10^6$ g/mole.

The preferred filler is a finely milled silica (silicon dioxide, $SiO_2$).

Silica has an important hygroscopic capacity, to the full advantage of the hygroscopic properties of the first layer 11.

The optimum average diameter of the filler particles of silicon dioxide $SiO_2$ are comprised between 0.01 and 20 $\mu$m, while the average surface area of said fillers is comprised between 30 $m^2$/g and 950 $m^2$/g.

Preferably, the average surface area of the filler particles is at least 100 $m^2$/g.

The first layer 11 being described has a pore size of less than 1 $\mu$m in diameter.

Preferably, over 50% of the pores have a diameter of less than 0.5 $\mu$m.

Porosity understood as:

$$Porosity = [1 - (apparent\ membrane\ density\ /\ resin\ density)]\ x\ 100$$

is preferably at least 50%.

The first layer 11 is for example treated with antibacterial and/or fungicidal agents.

The preferred final form is a sheet of preset thickness, substantially comprised between 200 $\mu$m and 1.5 cm; in particular, between 200 and 600 $\mu$m.

A microporous membrane known by the trade-name DARAMIC® and manufactured by DARAMIC Inc. (Norderstedt, Germany) has the characteristics described above for the first layer 11 and therefore can be used to form a multilayer article according to the invention.

Such microporous membrane is per se known and is currently used as a partition in accumulators and batteries and is provided in sheet form.

The characteristics of the membrane are disclosed in US-3,351,495 (in the name of W R GRACE & Co.) and US-6,139,759 (in the name of Daramic Inc.).

The version with a thickness of 600 $\mu$m of said DARAMIC® membrane has an ultimate tensile strength of substantially 5.8 MPa and a maximum breaking elongation of 505% (according to ISO 37): accordingly, it has excellent strength characteristics.

In this first described embodiment, the second layer 12, which is waterproof and vapor-permeable, is constituted by a hydrophobic microporous material based on polypropylene (where the term "polypropylene" is used to designate any polymer, homopolymer or copolymer originating from propylene monomers).

Preferably, the polypropylene of the second layer 12 is an isotactic homopolymer with low affinity for the absorption of proteins and fats.

A hydrophobic membrane known by the trade-name CELGARD® of the company CELGARD Inc. has the characteristics described above for the second layer 12 and therefore can be used to form a multilayer article according to the invention.

The coupling between the first layer 11 and the second layer 12 occurs depending on the type of "appearance" that said layers have at the time of coupling.

For example, if both the first layer 11 and the second layer 12 are in sheet form, they can be coupled by applying spots of adhesive, so as to avoid creating a compact layer, or by using known high-frequency or ultrasound technologies, avoiding the subtraction of breathable surface.

An alternative is for example to spread or roll one layer onto the other, which is considered as a backing.

In this case, the spread layer must strongly adhere to the underlying backing so as to resist separation.

Moreover, such layer must have the characteristic of being easy to form or place on the underlying layer by means of large-scale spreading and rolling techniques.

The polymeric polyethylene layer of the DARAMIC® membrane can be suitable for spreading, since its molecular weight is high enough to prevent its penetration into the pores of the microporous support, or can be dispersed in aggregates that are larger than the pores of the CELGARD® polypropylene membrane.

For example, one method for producing a multilayer article according to the invention is as follows:

- a solution or dispersion of the basic polymeric mix for the first layer 11 in a volatile organic liquid with low surface tension is prepared in order to produce a spreading solution that has a certain viscosity;
- the solution is applied by spreading to the surface of the sheet of the second layer 12 that acts as a backing, in order to form a coating layer on its surface;
- the volatile components of the spread are made to evaporate in order to promote the cross-linking reaction of the spread surface;
- the coating is dried in order to remove the residual humidity to produce the laminated article.

It is evident that one or more additional layers of polymer can be applied likewise and dried in order to reach the intended thicknesses.

The solution of the polymer can be applied to the backing made of hydrophobic microporous membrane by means of standard spreading techniques that are known in the background art, for example roller spreading or spray spreading.

One variation to the basic configuration of the multilayer article 10 composed of two individual layers is shown in Figure 2.

In this variation, the multilayer article according to the invention, generally designated by the reference numeral 100, is composed of a first layer 111 made of vapor-permeable microporous hygroscopic material, which is delimited in a sandwich-like fashion by two second layers 112 that are waterproof and vapor-permeable.

It is evident that the first layer 111 and the second layers 112 respectively have the same characteristics described earlier for the first layer 11 and the second layer 12.

Moreover, it is evident that other variations may have superimpositions of one or more of said first and second layers, combined according to the requirements.

A second layer 12 (or 112) can also be provided by spreading a fluoropolymer on a first microporous layer 11 (or 111) or optionally a polysiloxane.

For example, such fluoropolymer is the one commercially known by the trade name Zonyl® and manufactured by DuPont.

The second layer 12 (or 112) can also be provided by immersing the first layer 11 (or 111) in a bath of a fluoropolymer (for example Zonyl®) or of a polysiloxane.

A second embodiment (see Figure 3) of a multilayer article according to the invention, generally designated by the reference numeral 200, has a first layer 211 such as the one described in the above examples and has, as its second layer, designated here by the reference numeral 212, a film obtained by means of a plasma deposition treatment.

The idea of the film by plasma deposition arises from the surprising experimental discovery that a vapor of a siloxane organic compound can be used to produce an ultrathin layer on a microporous backing material by "cold plasma" polymerization in high vacuum at ambient temperature, providing waterproofing characteristics without altering the general characteristics and particularly the permeability characteristics of the backing material.

A waterproof and breathable hydrophobic layer can in fact be provided by plasma polymerization for example of a monomer based on siloxane, by depositing a layer of polymer (polysiloxane) on a microporous backing material (for example made of polyethylene or polystyrene).

This deposition can also be performed for example by using oil-repellent and water-repellent fluoropolymers such as those produced by DuPont and registered with the trade name Zonyl®.

Plasma is divided into hot and cold depending on the temperatures reached; it is also divided into ambient-pressure plasma and vacuum plasma.

In a cold plasma process to obtain a film according to the present invention, a gaseous or vaporized precursor compound is introduced in a reaction chamber at a very low pressure (in vacuum conditions).

A plasma condition is generated by energizing the precursor inside the reaction chamber by generating an electrical field.

The result is an ultrathin layer of the polymer, which adheres to, and is deposited on, the entire surface of any substrate material introduced in the reaction chamber.

The plasma polymerization process is started and performed by means of an electrical field so as to achieve breakdown of the precursor of the deposition layer within the reaction chamber.

Once breakdown has occurred, ions and reactive species are formed which begin and produce the atomic and molecular reactions that ultimately form thin films.

Layers created by plasma polymerization can use various configurations of electrical fields and different reaction parameters.

The thickness of the layer is controlled by selecting the initial polymerizable material and the reaction conditions, such as the deposition time of the monomer, the treatment time, the electrical frequency at which the reaction is performed, and the power used.

In the present invention, plasma polymerization is performed in vacuum.

The typical pressure range is between $10^{-1}$ and $10^{-5}$ mbar.

The precursor is made to react in its pure state by using a non-polymerizable inert gas, such as for example argon; such inert gas is used both as an inert dilution agent and as a carrier gas that assists the polymerization of the precursor.

Other gases that can be used are any of oxygen, helium, nitrogen, neon, xenon and ammonia.

The precursor must have a vapor pressure that is sufficient to be able to vaporize in a moderate vacuum.

The plasma deposition process begins by loading the backing material to be coated (in this case, the first layer 212) into the reaction chamber and then bringing the chamber to the intended vacuum pressure.

Once the vacuum pressure has been reached, the plasma polymerization reaction or a pretreatment reaction can begin.

The plasma polymerization reaction occurs by producing the discharge that generates the plasma and by injecting the vaporized precursor monomer into the reaction chamber.

A pretreatment reaction is required when the surface of the first layer is to be cleaned by subjecting it to an inert gas such as argon or nitrogen in order to clean the surface or promote the adhesion of the polymer film.

During the plasma generating discharge, the collision of the monomer with the ions and electrons of the plasma allows polymerization of the monomer.

The resulting polymer is deposited on the exposed surfaces inside the chamber.

The properties of the film are not just a function of the structure of the monomer but also a function of the discharge frequency, of the power used, of the monomer flow-rate and, of the pressure.

Porosity, surface morphology and permeability can vary according to the reaction conditions.

The deposition process ends when the intended thickness of deposited material is reached.

Owing to the fact that the first layer 212 is made of insulating material (polyethylene, for example, is one of the most insulating materials known), in order to maintain the plasma conditions it is necessary to apply to the process a radiofrequency generator in order to make the electrical field in the treatment oscillate with a frequency substantially on the order of 13.56 MHz, with an applied electric field power substantially equal to 50-700 watts and a vacuum level comprised between $10^{-1}$ and $10^{-5}$ mbar.

As regards the duration of the treatment, it has been observed that for a precursor such as a siloxane monomer, the optimum time is substantially comprised between 160 and 600 seconds; in particular, an optimum duration of substantially 420 seconds has been identified.

One variation to the basic configuration of the multilayer article 200 composed of two individual layers is shown in Figure 4.

In this variation, the multilayer article according to the invention, generally designated by the reference numeral 300, is composed of a first layer 311 made of vapor-permeable and hygroscopic microporous material, which is delimited in a sandwich-like fashion by two seconds layers 312, which are waterproof and vapor-permeable.

It is evident that the first layer 311 and the second layers 312 respectively have the same characteristics described earlier for the first layer 211 and the second layer 212.

Moreover, it is evident that other variations may have superimpositions of one or more of the first and second layers, combined according to the requirements.

In practice it has been observed that the invention thus described solves the problems noted in known types of waterproof and vapor-permeable multilayer article.

A multilayer article has in fact been provided which associates a first microporous and hygroscopic layer with a second hydrophobic layer, said layers preventing the inflow of any liquid phase while allowing the transfer of water vapor and other volatile components.

The silicon-based filler provided inside the first layer in order to generate the microporous structure is a highly hygroscopic material that has a great tendency to absorb water: accordingly, the first layer is not appropriate to be used individually as a waterproof layer, but is very useful for conveying perspiration and moisture away from the body (the torso or legs in the case of clothing, the feet in the case of shoes).

Moreover, since the first hygroscopic layer and the second hydrophobic layer are both structurally stronger than the membranes currently used and are thicker, they can be used in combination without backings that reduce their permeability to vapor or air.

In this regard, since the multilayer article (10, 100, 200, 300 et cetera) has structural characteristics, it can be used as a supporting structure of a shoe; for example, in combination with a tread that has upward openings, the multilayer article can be used as a supporting element of a breathable and waterproof sole.

Such layers can be coupled, depending on the requirements, by applying spots of adhesive so as to avoid creating a compact layer or by using known high-frequency or ultrasound technologies, avoiding the subtraction of breathable surface, or by spreading or rolling of one layer onto the other.

In this regard, since the first layer is the one that reaches greater thicknesses without compromising vapor and air permeability, by using it as a backing for the plasma deposition of a waterproof breathable film, it is possible to achieve the same above mentioned aim and objects by pairing the two layers by spreading, rolling or adhesive bonding.

It should be noted that the use of plasma deposition solves the problems of conformity and adhesion of the first layer on the second layer, since the plasma-deposited polymer adheres to the backing layer for a longer time than, for example, a conventional spreading.

Moreover, since the waterproof film is deposited in partial vacuum conditions, and since the backing material can be cleaned in the reaction chamber beforehand with argon with a high degree of purity, any impurities that could generate fractures, discontinuities, distortions of the deposited waterproof film are completely avoided.

The invention thus conceived is susceptible of numerous modifications and variations, all of which are within the scope of the appended claims; all the details may further be replaced with other technically equivalent elements.

In practice, the materials used, so long as they are compatible with the specific use, as well as the dimensions, may be any according to requirements and to the state of the art.

The disclosures in Italian Patent Application No. PD2003A000314 from which this application claims priority are incorporated herein by reference.

**Claims**

1. A waterproof vapor-permeable multilayer article,
   at least one first layer (11, 111, 211, 311) made of a material that is vapor-permeable and microporous and is at least partially hygroscopic or can assume hygroscopic characteristics over time, and
   at least one second layer (12, 112, 212, 312) that is waterproof and vapor-permeable and that is coupled to said first layer (11, 111, 211, 311) to form said multilayer article,
   said layers preventing the inflow of any liquid phase while allowing the transfer of water vapor and other volatile components, and
   said at least first layer (11, 111, 211, 311) made of a microporous material has a pore size of less than 1 $\mu$m in diameter.

2. The multilayer article according to claim 1, **characterized in that** said at least one first layer (11, 111, 211, 311) comprises a base of polyolefin and filler particles.

3. The multilayer article according to claim 2, **characterized in that** the molecular weight of said polyolefin is at least 500,000 g/mole.

4. The multilayer article according to claim 3, **characterized in that** the molecular weight of said polyolefin is preferably comprised between $4x10^6$ g/mole and $7x10^6$ g/mole.

5. The multilayer article according to one of claims 2 to 4, **characterized in that** said polyolefin is constituted by isotactic polypropylene or polyethylene.

6. The multilayer article according to one of claims 2 to 5, **characterized in that** said filler is preferably silicon dioxide $SiO_2$.

7. The multilayer article according to claim 6, **characterized in that** the average diameter of the filler particles of silicon dioxide $SiO_2$ are substantially comprised between 0.01 $\mu$m and 20 $\mu$m, while the average surface area of said fillers is substantially comprised between 30 $m^2$/g and 950 $m^2$/g.

8. The multilayer article according to claim 6 or 7, **characterized in that** the average surface area of said filler particles is preferably at least 100 m$^2$/g.

9. The multilayer article according to one or more of the preceding claims, **characterized in that** preferably more than 50% of the pores of said at least one first layer (11, 111, 211, 311) made of microporous material have art diameter of less than 0.5 $\mu$m.

10. The multilayer article according to one or more of the preceding clams, characterized that the porosity of said at least one first layer (11, 111, 211, 311) made of microporous material is preferably at least 50%.

11. The multilayer article according to one or more of the preceding claims, **characterized in that** said at least one first layer (11, 111, 211, 311)made of microporous material has a thickness comprised between 200 $\mu$m and 1.5 cm.

12. The multilayer article according to claim 11, **characterized in that** said at least one first layer (11, 111, 211, 311) made of microporous material has a thickness comprised preferably between 200 $\mu$m and 600 $\mu$m.

13. The multilayer article according to one or more of the preceding claims, **characterized in that** said at least one second waterproof vapor-permeable layer (12, 112) is constituted by a polypropylene-based microporous hydrophobic material.

14. The multilayer article according to claim 13, **characterized in that** the polypropylene of said microporous hydrophobic material is an isotactic homopolymer.

15. The multilayer article according to claim 1, **characterized in that** said at least one second layer (12,112) is composed of a polymer based on fluoropolymer or polysiloxane, said at least one second layer (12, 112) adhering to said first layer (11, 111) by spreading or immersing said first layer (11, 111) in a bath of said polymer.

16. The multilayer article according to claim 15, **characterized in that** at least one second layer (12,112) is hydrophobic.

17. A method for manufacturing a multilayer article according to one of the preceding claims, consisting in:

> - preparing a solution or dispersion of the basic polymeric mix for said first layer (11, 111) in a volatile organic liquid with low surface tension, in order to produce a spreading solution that has a certain viscosity;
> - applying said solution by spreading to the surface of said second layer (12, 112), which acts as a backing, in order to form a coating layer on its surface;
> - evaporating the volatile components of the spread in order to promote the cross-linking reaction of the spread surface;
> - drying the coating in order to remove the residual humidity.

18. A method for producing a multilayer article according to one of claims 1 to 14, which consists in coupling said first layer (11, 111) and said second layer (12, 112) by lamination of one of said layers onto the other.

19. A method for producing a multilayer article according to one of claims 1 to 14, which consists in coupling said first layer (11, 111) in sheet form to said second layer (12, 112), also in sheet form, by applying adhesive spots or by using ultrasound or by means of high-frequency welding.

20. The multilayer article according to one or more of claims 1 to 11, **characterized in that** said at least one second layer (212, 312) is constituted by a film obtained by means of a plasma deposition treatment.

21. The multilayer article according to claim 20, **characterized in that** said plasma deposition treatment is obtained by working in high-vacuum cold plasma conditions.

22. The multilayer article according to claim 20 or 21, **characterized in that** said plasma deposition treatment is obtained by using a radiofrequency generator so that the electrical field in the treatment oscillates with a frequency substantially comprised between 13 MHz and 14 MHz.

23. The multilayer article according to claim 22, **characterized in that** said plasma deposition treatment is obtained by using a radiofrequency generator so that the electrical field in the treatment oscillates with a frequency preferably on the order of 13.56 MHz.

24. The multilayer article according to one of claims 20 to 23, **characterized in that** said plasma deposition treatment is obtained by using a power of the electrical field applied in the treatment that is substantially comprised between 50 watts and 700 watts.

25. The multilayer article according to one of claims 20 to 24, **characterized in that** the duration of said plasma deposition treatment for a siloxane-based monomer is comprised between 160 and 600 seconds.

26. The multilayer article according to claim 25, **characterized in that** the duration of said plasma deposition treatment for a siloxane-based monomer is substantially equal to 420 seconds.

27. The multilayer article according to one of claims 20 to 26, **characterized in that** the level of vacuum in said plasma deposition treatment is substantially comprised between $10^{-1}$ mbar and $10^{-5}$ mbar.

28. The multilayer article according to claim 20, **characterized in that** said plasma deposition treatment is obtained by working in high-vacuum cold plasma conditions and by using a radiofrequency generator so that the electrical field in the treatment oscillates with a frequency on the order of 13.75 MHz, with an applied electrical field power of 300-500 watts, and a vacuum level comprised between $10^{-1}$ and $10^{-5}$ mbar.

29. The multilayer article according to one of claims 20 to 28, **characterized in that** the plasma deposition precursor material is a siloxane-based monomer.

30. The multilayer article according to one of claims 20 to 29, **characterized in that** the plasma deposition precursor material is an oil-repellent and water-repellent fluoropolymer.

31. The multilayer article according to one of claims 20 to 29, **characterized in that** the material of said at least one second layer (212, 312) is a polysiloxane.

32. The multilayer article according to one of claims 20 to 28, **characterized in that** the material of said at least one second layer (212, 312) is an oil-repellent and water-repellent fluoropolymer.

33. A method for producing a multilayer article according to one of the preceding claims 19 to 30, comprising the steps of:

    - loading said first layer (211, 311) to be coated into the reaction chamber,
    - bringing said reaction chamber to a preset vacuum pressure;
    - starting plasma generating electrical discharge;
    - injecting the vaporized precursor monomer into said reaction chamber;
    - waiting for a preset deposition time.

34. A production method according to claim 32, **characterized in that** it comprises a pretreatment step that consists in the surface cleaning of said first layer (211, 311) by subjecting it to an inert gas that is injected into said reaction chamber.

**Patentansprüche**

1. Wasserdichter, dampfdurchlässiger, mehrlagiger Artikel,
bei dem zumindest eine erste Lage (11, 111, 211, 311) aus einem Material besteht, das dampfdurchlässig und mikroporös ist und das zumindest teilweise hygroskopisch ist oder im Laufe der Zeit hygroskopische Eigenschaften annehmen kann, und
bei dem zumindest eine zweite Lage (12, 112, 212, 312) wasserdicht und dampfdurchlässig ist und die mit der ersten Lage (11, 111, 211, 311) zum Ausbilden des mehrlagigen Artikels gekoppelt ist,
wobei diese Lagen das Einströmen jedweder Flüssigphase verhindern, wohingegen der Durchgang von Wasserdampf sowie weiterer flüchtiger Komponenten ermöglicht wird, und
die zumindest erste Lage (11, 111, 211, 311) aus einem mikroporösen Material mit einer Porengröße von unter 1 μm Durchmesser besteht.

**2.** Mehrlagiger Artikel nach Anspruch 1, **dadurch gekennzeichnet, dass** die zumindest eine erste Lage (11, 111, 211, 311) eine Polyolefin- und Füllstoff-Basis umfasst.

**3.** Mehrlagiger Artikel nach Anspruch 2, **dadurch gekennzeichnet, dass** das Molekulargewicht des Polyolefins zumindest 500 Tsd. g/mol beträgt.

**4.** Mehrlagiger Artikel nach Anspruch 3, **dadurch gekennzeichnet, dass** das Molekulargewicht des Polyolefins bevorzugt zwischen $4x10^6$ g/mol und $7x10^6$ g/mol beträgt.

**5.** Mehrlagiger Artikel nach einem der Ansprüche 2 bis 4, **dadurch gekennzeichnet, dass** das Polyolefin aus isotaktischem Polypropylen oder Polyethylen gebildet ist.

**6.** Mehrlagiger Artikel nach einem der Ansprüche 2 bis 5, **dadurch gekennzeichnet, dass** der Füllstoff bevorzugt aus Siliciumdioxid $SiO_2$ besteht.

**7.** Mehrlagiger Artikel nach Anspruch 6, **dadurch gekennzeichnet, dass** der Durchmesser der Füllstoffe aus Siliciumdioxid $SiO_2$ im Durchschnitt im Wesentlichen zwischen 0,01 $\mu$m und 20 $\mu$m beträgt, während die Oberfläche der Füllstoffe im Durchschnitt im Wesentlichen zwischen 30 m$^2$/g und 950 m$^2$/g beträgt.

**8.** Mehrlagiger Artikel nach Anspruch 6 oder 7, **dadurch gekennzeichnet, dass** die Oberfläche der Füllstoffe im Durchschnitt bevorzugt zumindest 100 m$^2$/g beträgt.

**9.** Mehrlagiger Artikel nach einem oder mehreren der vorherigen Ansprüche, **dadurch gekennzeichnet, dass** bevorzugt über 50% der Poren der zumindest einen ersten Lage (11, 111, 211, 311) aus mikroporösem Material einen Durchmesser kleiner 0,5 $\mu$m aufweisen.

**10.** Mehrlagiger Artikel nach einem oder mehreren der vorherigen Ansprüche, **dadurch gekennzeichnet, dass** die Porosität der zumindest einen ersten Lage (11, 111, 211, 311) aus mikroporösem Material bevorzugt zumindest 50% beträgt.

**11.** Mehrlagiger Artikel nach einem oder mehreren der vorherigen Ansprüche, **dadurch gekennzeichnet, dass** die Dicke der zumindest einen ersten Lage (11, 111, 211, 311) aus mikroporösem Material zwischen 200 $\mu$m und 1,5 cm beträgt.

**12.** Mehrlagiger Artikel nach Anspruch 11, **dadurch gekennzeichnet, dass** die Dicke der zumindest einen ersten Lage (11, 111, 211, 311) aus mikroporösem Material bevorzugt zwischen 200 $\mu$m und 600 $\mu$m beträgt.

**13.** Mehrlagiger Artikel nach einem oder mehreren der vorherigen Ansprüche, **dadurch gekennzeichnet, dass** die zumindest eine zweite wasserdichte, dampfdurchlässige Lage (12, 112) aus einem Polypropylen-basierten mikroporösen hydrophoben Material gebildet ist.

**14.** Mehrlagiger Artikel nach Anspruch 13, **dadurch gekennzeichnet, dass** das Polypropylen des mikroporösen hydrophoben Materials ein isotaktisches Homopolymer ist.

**15.** Mehrlagiger Artikel nach Anspruch 1, **dadurch gekennzeichnet, dass** die zumindest eine zweite Lage (12, 112) aus einem Fluoropolymer- oder Polysiloxan-basierten Polymer zusammengesetzt ist, wobei die zumindest eine zweite Lage (12, 112) dadurch an der ersten Lage (11, 111) anhaftet, indem sie auf diese aufgetragen oder die erste Lage (11, 111) in das Polymer-Bad getaucht wird.

**16.** Mehrlagiger Artikel nach Anspruch 15, **dadurch gekennzeichnet, dass** zumindest eine zweite Lage (12, 112) hydrophob ist.

**17.** Verfahren zum Herstellen eines mehrlagigen Artikels nach einem der vorherigen Ansprüche, bestehend aus dem:

   - Präparieren einer Lösung oder Dispersion der Basis-Polymermischung für die erste Lage (11, 111) in einer flüchtigen organischen Flüssigkeit mit geringer Oberflächenspannung, um eine eine bestimmte Viskosität aufweisende ausfließende Lösung zu herzustellen;
   - Aufbringen der Lösung durch Auftragen auf die Oberfläche der zweiten Lage (12, 112), die als Träger wirkt, um eine Beschichtungslage auf deren Oberfläche auszubilden;
- Verdampfen der flüchtigen Bestandteile der Auftragsmasse, um die Quervernetzungsreaktion der aufgetragenen Oberfläche zu stimulieren;
- Abtrocknenlassen der Beschichtung, um die Restfeuchtigkeit zu entziehen.

18. Verfahren zum Fertigen eines mehrlagigen Artikels nach einem der Ansprüche 1 bis 14, bestehend aus dem Koppeln der ersten Lage (11, 111) und der zweiten Lage (12, 112) durch Auflaminieren einer der Lagen auf die andere.

19. Verfahren zum Fertigen eines mehrlagigen Artikels nach einem der Ansprüche 1 bis 14, bestehend aus dem Koppeln der ersten Lage (11, 111) aus Materialbahnstücken mit der ebenfalls aus Materialbahnstücken bestehenden zweiten Lage (12, 112) durch Haftpunktschweißen oder durch Ultraschallbehandlung oder durch HF-Schweißen.

20. Mehrlagiger Artikel nach einem oder mehreren der Ansprüche 1 bis 11, **dadurch gekennzeichnet, dass** die zumindest eine zweite Lage (212, 312) durch einen durch eine Plasmaabscheidungsbehandlung erhaltenen Film gebildet wird.

21. Mehrlagiger Artikel nach Anspruch 20, **dadurch gekennzeichnet, dass** die Plasmaabscheidungsbehandlung durch Bearbeiten unter Hochvakuum-Kaltplasma-Bedingungen erhalten wird.

22. Mehrlagiger Artikel nach Anspruch 20 oder 21, **dadurch gekennzeichnet, dass** die Plasmaabscheidungsbehandlung durch Verwenden eines RF-Generators erfolgt, so dass das elektrische Feld während der Behandlung mit einer Frequenz von im Wesentlichen zwischen 13 MHz und 14 MHz schwankt.

23. Mehrlagiger Artikel nach Anspruch 22, **dadurch gekennzeichnet, dass** die Plasmaabscheidungsbehandlung durch Verwenden eines RF-Generators erfolgt, so dass das elektrische Feld während der Behandlung bevorzugt mit einer Frequenz der Größenordnung von 13,56 MHz schwankt.

24. Mehrlagiger Artikel nach einem der Ansprüche 20 bis 23, **dadurch gekennzeichnet, dass** die Plasmaabscheidungsbehandlung durch Verwenden einer bei der Behandlung angelegten elektrischen Leistung erfolgt, die im Wesentlichen zwischen 50 Watt und 700 Watt beträgt.

25. Mehrlagiger Artikel nach einem der Ansprüche 20 bis 24, **dadurch gekennzeichnet, dass** die Dauer der Plasmaabscheidungsbehandlung für ein Siloxan-basiertes Monomer zwischen 160 und 600 Sekunden beträgt.

26. Mehrlagiger Artikel nach Anspruch 25, **dadurch gekennzeichnet, dass** die Dauer der Plasmaabscheidungsbehandlung für ein Siloxan-basiertes Monomer im Wesentlichen 420 Sekunden beträgt.

27. Mehrlagiger Artikel nach einem der Ansprüche 20 bis 26, **dadurch gekennzeichnet, dass** die Höhe des Vakuums bei der Plasmaabscheidungsbehandlung im Wesentlichen zwischen $10^{-1}$ mbar und $10^{-5}$ mbar beträgt.

28. Mehrlagiger Artikel nach Anspruch 20, **dadurch gekennzeichnet, dass** die Plasmaabscheidungsbehandlung durch Bearbeiten unter Hochvakuum-Kaltplasma-Bedingungen und durch Verwenden eines RF-Generators erfolgt, so dass das elektrische Feld bei der Behandlung mit einer Frequenz der Größenordnung von 13,75 MHz, bei einer angelegten elektrischen Leistung von 300-500 Watt und bei einem Vakuum in Höhe von zwischen $10^{-1}$ und $10^{-5}$ mbar oszilliert.

29. Mehrlagiger Artikel nach einem der Ansprüche 20 bis 28, **dadurch gekennzeichnet, dass** das Vorläufermaterial für die Plasmaabscheidung ein Siloxan-basiertes Monomer ist.

30. Mehrlagiger Artikel nach einem der Ansprüche 20 bis 29, **dadurch gekennzeichnet, dass** das Vorläufermaterial für die Plasmaabscheidung ein öl- und wasserabstoßendes Fluorpolymer ist.

31. Mehrlagiger Artikel nach einem der Ansprüche 20 bis 29, **dadurch gekennzeichnet, dass** das Material der zumindest einen zweiten Lage (212, 312) ein Polysiloxan ist.

32. Mehrlagiger Artikel nach einem der Ansprüche 20 bis 28, **dadurch gekennzeichnet, dass** das Material der zumindest einen zweiten Lage (212, 312) ein öl- und wasserabstoßendes Fluorpolymer ist.

**33.** Verfahren zum Fertigen eines mehrlagigen Artikels nach einem der vorherigen Ansprüche 19 bis 30, die folgenden Schritte umfassend:

- Beladen der Reaktionskammer mit der ersten, mit einer Beschichtung zu versehenden Lage (211, 311),
- Einstellen eines vorgegebenen Vakuumdrucks in der Reaktionskammer;
- Ingangsetzen der plasmagenerierenden elektrischen Entladung;
- Injizieren des verdampften Monomer-Vorläufermaterials in die Reaktionskammer;
- Abwarten der vorgegebenen Abscheidungszeit.

**34.** Fertigungsverfahren nach Anspruch 32, **dadurch gekennzeichnet, dass** es einen Vorbehandlungsschritt umfasst, der in der Oberflächenreinigung der ersten Lage (211, 311) besteht, indem diese einem inerten Gas ausgesetzt wird, welches in die Reaktionskammer injiziert wird.

**Revendications**

**1.** Article multicouche perméable à la vapeur et étanche à l'eau, comprenant
au moins une première couche (11, 111, 211, 311) constituée d'un matériau qui est perméable à la vapeur et microporeux et est au moins partiellement hygroscopique ou peut adopter des caractéristiques hygroscopiques dans le temps, et
au moins une seconde couche (12, 112, 212, 312) qui est étanche à l'eau et perméable à la vapeur et qui est couplée à ladite première couche (11, 111, 211, 311) pour former ledit article multicouche,
lesdites couches empêchant l'entrée d'une quelconque phase liquide tout en autorisant le transfert de vapeur d'eau et d'autres composants volatils, et
ladite au moins une première couche (11, 111, 211, 311) constituée d'un matériau microporeux présente une taille de pore inférieure à 1 $\mu$m de diamètre.

**2.** Article multicouche selon la revendication 1, **caractérisé en ce que** ladite au moins une première couche (11, 111, 211, 311) comprend une base de poly(oléfine) et des particules de charge.

**3.** Article multicouche selon la revendication 2, **caractérisé en ce que** la masse moléculaire de ladite poly(oléfine) est d'au moins 500 000 g/mole.

**4.** Article multicouche selon la revendication 3, **caractérisé en ce que** la masse moléculaire de ladite poly(oléfine) est de préférence comprise entre 4 x $10^6$ g/mole et 7 x $10^6$ g/mole.

**5.** Article multicouche selon l'une des revendications 2 à 4, **caractérisé en ce que** ladite poly(oléfine) est constituée de poly(propylène) ou de poly(éthylène) isotactique.

**6.** Article multicouche selon l'une des revendications 2 à 5, **caractérisé en ce que** ladite charge est de préférence le dioxyde de silicium $SiO_2$.

**7.** Article multicouche selon la revendication 6, **caractérisé en ce que** le diamètre moyen des particules de charge de dioxyde de silicium $SiO_2$ est sensiblement compris entre 0,01 $\mu$m et 20 $\mu$m, tandis que l'aire moyenne desdites charges est sensiblement comprise entre 30 $m^2$/g et 950 $m^2$/g.

**8.** Article multicouche selon la revendication 6 ou 7, **caractérisé en ce que** l'aire moyenne desdites particules de charge est de préférence d'au moins 100 $m^2$/g.

**9.** Article multicouche selon une ou plusieurs des revendications précédentes, **caractérisé en ce que**, de préférence, plus de 50 % des pores de ladite au moins une première couche (11, 111, 211, 311) constituée d'un matériau microporeux ont un diamètre inférieur à 0,5 $\mu$m.

**10.** Article multicouche selon une ou plusieurs des revendications précédentes, **caractérisé en ce que** la porosité de ladite au moins une première couche (11, 111, 211, 311) constituée d'un matériau microporeux est de préférence d'au moins 50 %.

**11.** Article multicouche selon une ou plusieurs des revendications précédentes, **caractérisé en ce que** ladite au moins une première couche (11, 111, 211, 311) constituée d'un matériau microporeux présente une épaisseur comprise entre 200 μm et 1,5 cm.

12. Article multicouche selon la revendication 11, **caractérisé en ce que** ladite au moins une première couche (11, 111, 211, 311) constituée d'un matériau microporeux présente une épaisseur comprise de préférence entre 200 μm et 600 μm.

13. Article multicouche selon une ou plusieurs des revendications précédentes, **caractérisé en ce que** ladite au moins une seconde couche étanche à l'eau et perméable à la vapeur (12, 112) est constituée d'un matériau hydrophobe microporeux à base de poly(propylène).

14. Article multicouche selon la revendication 13, **caractérisé en ce que** le poly(propylène) dudit matériau hydrophobe microporeux est un homopolymère isotactique.

15. Article multicouche selon la revendication 1, **caractérisé en ce que** ladite au moins une seconde couche (12, 112) est composée d'un polymère basé sur un fluoropolymère ou un poly(siloxane), ladite au moins une seconde couche (12, 112) adhérant à ladite première couche (11, 111) par étalement ou immersion de ladite première couche (11, 111) dans un bain dudit polymère.

16. Article multicouche selon la revendication 15, **caractérisé en ce qu'**au moins une seconde couche (12, 112) est hydrophobe.

17. Procédé de fabrication d'un article multicouche selon l'une des revendications précédentes, consistant à :

      - préparer une solution ou dispersion du mélange polymère basique pour ladite première couche (11, 111) dans un liquide organique volatil de faible tension de surface, afin de produire une solution d'étalement qui présente une certaine viscosité ;
      - appliquer ladite solution par étalement sur la surface de ladite seconde couche (12, 112), qui agit comme un renfort, afin de former une couche de revêtement sur sa surface ;
      - évaporer les composants volatils de la substance étalée afin de favoriser la réaction de réticulation de la surface étalée ;
      - sécher le revêtement afin d'éliminer l'humidité résiduelle.

18. Procédé de production d'un article multicouche selon l'une des revendications 1 à 14, qui consiste à coupler ladite première couche (11, 111) et ladite seconde couche (12, 112) par stratification de l'une desdites couches sur l'autre.

19. Procédé de production d'un article multicouche selon l'une des revendications 1 à 14, qui consiste à coupler ladite première couche (11, 111) sous forme de feuille à ladite seconde couche (12, 112), également sous forme de feuille, par application de points adhésifs ou par l'utilisation d'ultrasons ou au moyen d'un soudage haute fréquence.

20. Article multicouche selon une ou plusieurs des revendications 1 à 11, **caractérisé en ce que** ladite au moins une seconde couche (212, 312) est constituée d'un film obtenu au moyen d'un traitement de dépôt par plasma.

21. Article multicouche selon la revendication 20, **caractérisé en ce que** ledit traitement de dépôt par plasma est obtenu par travail dans des conditions de plasma froid à vide élevé.

22. Article multicouche selon la revendication 20 ou 21, **caractérisé en ce que** ledit traitement de dépôt par plasma est obtenu en utilisant un générateur de radiofréquence de sorte que le champ électrique dans le traitement oscille avec une fréquence sensiblement comprise entre 13 MHz et 14 MHz.

23. Article multicouche selon la revendication 22, **caractérisé en ce que** ledit traitement de dépôt par plasma est obtenu en utilisant un générateur de radiofréquence, de sorte que le champ électrique dans le traitement oscille avec une fréquence de préférence de l'ordre de 13,56 MHz.

24. Article multicouche selon une des revendications 20 à 23, **caractérisé en ce que** ledit traitement de dépôt par plasma est obtenu en utilisant une puissance du champ électrique appliqué dans le traitement qui est sensiblement comprise entre 50 watts et 700 watts.

**25.** Article multicouche selon une des revendications 20 à 24, **caractérisé en ce que** la durée dudit traitement de dépôt par plasma pour un monomère à base de siloxane est comprise entre 160 et 600 secondes.

**26.** Article multicouche selon la revendication 25, **caractérisé en ce que** la durée dudit traitement de dépôt par plasma pour un monomère à base de siloxane est sensiblement égale à 420 secondes.

**27.** Article multicouche selon l'une des revendications 20 à 26, **caractérisé en ce que** le niveau de vide dans ledit traitement de dépôt par plasma est sensiblement compris entre $10^{-1}$ mbar et $10^{-5}$ mbar.

**28.** Article multicouche selon la revendication 20, **caractérisé en ce que** ledit traitement de dépôt par plasma est obtenu en travaillant dans des conditions de plasma froid à vide élevé et en utilisant un générateur de radiofréquence de sorte que le champ électrique dans le traitement oscille avec une fréquence de l'ordre de 13,75 MHz, avec une puissance de champ électrique appliqué de 300 à 500 watts et un niveau de vide compris entre $10^{-1}$ et $10^{-5}$ mbar.

**29.** Article multicouche selon l'une des revendications 20 à 28, **caractérisé en ce que** le matériau précurseur de dépôt par plasma est un monomère à base de siloxane.

**30.** Article multicouche selon l'une des revendications 20 à 29, **caractérisé en ce que** le matériau précurseur de dépôt par plasma est un fluoropolymère oléophobe et hydrophobe.

**31.** Article multicouche selon l'une des revendications 20 à 29, **caractérisé en ce que** le matériau de ladite au moins une seconde couche (212, 312) est un poly(siloxane).

**32.** Article multicouche selon l'une des revendications 20 à 28, **caractérisé en ce que** le matériau de ladite au moins une seconde couche (212, 312) est un fluoropolymère oléophobe et hydrophobe.

**33.** Procédé de production d'un article multicouche selon l'une des revendications 19 à 30 précédentes, comprenant les étapes consistant à :

> - charger ladite première couche (211, 311) à revêtir dans la chambre de réaction,
> - amener ladite chambre de réaction à une pression de vide prédéfinie ;
> - commencer une décharge électrique de génération de plasma ;
> - injecter le monomère précurseur vaporisé dans ladite chambre de réaction ;
> - attendre une durée de dépôt prédéfinie.

**34.** Procédé de production selon la revendication 32, **caractérisé en ce qu'**il comprend une étape de prétraitement qui consiste à effectuer le nettoyage de surface de ladite première couche (211, 311) en la soumettant à un gaz inerte qui est injecté dans ladite chambre de réaction.

*10*

*11*

*12*

## Fig. 1

*100*

*112*

*111*

*112*

## Fig. 2

*200*

*211*

*212*

## Fig. 3

*300*

*312*

*311*

*312*

## Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9530793 A
- DE 19713609
- US 3351495 A
- US 6139759 A
- IT PD20030314 A